# EUROPEAN PATENT APPLICATION

(11) **EP 4 685 986 A1**
(43) Date of publication of application: **28.01.2026**
(21) Application number: 25150357.9
(22) Date of filing: 06.01.2025
(51) Int. Cl.: H01M 50/533, H01M 50/54, H01M 50/55, H01M 10/0525, H01M 50/15, H01M 50/176

(54) **SECONDARY BATTERY AND BATTERY PACK INCLUDING THE SAME**

(30) Priority: 22.07.2024 KR 20240096382
(71) Applicant: Samsung SDI Co., Ltd., Yongin-si, Gyeonggi-do 17084 (KR)
(72) Inventor: BAE, Chae Eun, 16678 Suwon-si (KR); YONG, Jun Sun, 16678 Suwon-si (KR); BAE, Kwang Soo, 16678 Suwon-si (KR); LEE, Jun Hyung, 16678 Suwon-si (KR); KIM, Ji Hwan, 16678 Suwon-si (KR); ROH, Heyoung Cheoul, 16678 Suwon-si (KR); LEE, Jung Woo, 16678 Suwon-si (KR)
(74) Representative: Marks & Clerk LLP

(57) **Abstract**

A secondary battery (2) includes a case (100), an electrode assembly (200) in the case and including a first electrode (210) and a second electrode (220), a first tab member (301) connected to the first electrode and extending from the electrode assembly in a first direction, a cap assembly (400) facing the electrode assembly and including a first terminal (420) and a second terminal (430), and a first connection member (500) between the electrode assembly and the cap assembly and including a first current collector plate (520) connected to the first tab member and a first current collector (510) connected to the first terminal and passing through the first current collector plate.

## Description

### BACKGROUND

### 1. Field

Aspects of embodiments of the present disclosure relate to a secondary battery and a battery pack including the same.

### 2. Description of the Related Art

In general, as demand for portable electronic products, such as laptops, video cameras, and portable phones, increases rapidly and commercialization of robots, electric vehicles, and the like begins in earnest, research on high-performance secondary batteries capable of repeated charging and discharging is actively being conducted.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ions are intercalated/deintercalated into/from the positive and negative electrodes.

The above-described information disclosed in the technology that forms the background of the present disclosure is provided to improve understanding of the background of the present disclosure, and thus may include information that does not constitute the related art.

### SUMMARY

According to an aspect of one or more embodiments of the present invention, a secondary battery and a battery pack including the same capable of reducing material costs and increasing a space utilization rate of a cell by changing a shape and bonding method of components are provided.

The above and other aspects and features of the present disclosure will be described in or will be apparent from the following description of some embodiments of the present disclosure.

According to one or more embodiments of the present invention, a secondary battery includes a case, an electrode assembly in the case and including a first electrode and a second electrode, a first tab member connected to the first electrode and extending from the electrode assembly in a first direction, a cap assembly facing the electrode assembly and including a first terminal and a second terminal, and a first connection member between the electrode assembly and the cap assembly and including a first current collector plate connected to the first tab member and a first current collector connected to the first terminal and passing through the first current collector plate.

The first current collector may be welded to a bottom surface of the first current collector plate.

The first current collector plate may include a first center plate in which a first center hole is formed, a first inner plate extending from an end portion of the first center plate in a second direction that intersects the first direction, and a first outer plate extending from another end portion of the first center plate in the second direction.

The first inner plate may include a first inner inclined plate extending downwardly at an angle from the first center plate, and a first inner horizontal plate extending horizontally from the first inner inclined plate, and the first outer plate may include a first outer inclined plate extending downwardly at an angle from the first center plate, and a first outer horizontal plate extending horizontally from the first outer inclined plate.

The first current collector may include a first body coupled to a bottom surface of the first center plate, and a first boss protruding from the first body in the first direction, and connected to the first terminal through the first center hole.

The first body may have a circular band shape.

An upper surface of the first body and a bottom surface of the first center plate may be laser welded to form a circular weld line.

A thickness of the first body may be from 0.4 mm to 1 mm.

A height of the first body may be greater than a height of each of the first inner horizontal plate and the first outer horizontal plate, such that the first body and the electrode assembly are spaced apart from each other.

The first connection member may further include a first insulating pad between the first current collector and the electrode assembly.

The first connection member may further include a first current collector guide part configured to guide an assembly position of the first current collector and the first current collector plate.

The first current collector guide part may include a first guide protrusion located on the first current collector, and a first guide groove which located in the first current collector plate and in which the first guide protrusion is configured to be inserted.

The secondary battery may further include a second tab member connected to the second electrode and spaced apart from the first tab member, and a second connection member between the electrode assembly and the cap assembly and connected to the second terminal and the second tab member.

The second connection member may include a second current collector plate connected to the second tab member, and a second current collector connected to the second terminal by passing through the second current collector plate and welded to a bottom surface of the second current collector plate.

The second current collector plate may include a second center plate in which a second center hole is formed, a second inner plate extending from an end portion of the second center plate in a second direction that intersects the first direction, and a second outer plate extending from another end portion of the second center plate in the second direction.

The second inner plate may include a second inner inclined plate extending downwardly at an angle from the second center plate, and a second inner horizontal plate extending horizontally from the second inner inclined plate, and the second outer plate may include a second outer inclined plate extending downwardly at an angle from the second center plate, and a second outer horizontal plate extending horizontally from the second outer inclined plate.

The second current collector may include a second body coupled to a bottom surface of the second center plate, and a second boss protruding from the second body in the first direction, and connected to the second terminal through the second center hole.

The second body may have a circular band shape.

According to one or more embodiments of the present invention, a battery pack includes a housing, and a plurality of secondary batteries in the housing, wherein each of the secondary batteries includes a case, an electrode assembly in the case and including a first electrode and a second electrode, a first tab member connected to the first electrode and extending from the electrode assembly in a first direction, a cap assembly facing the electrode assembly and including a first terminal and a second terminal, and a first connection member between the electrode assembly and the cap assembly and including a first current collector plate connected to the first tab member and a first current collector connected to the first terminal and passing through the first current collector plate.

The battery pack may further include a second tab member connected to the second electrode and spaced apart from the first tab member, and a second connection member between the electrode assembly and the cap assembly and including a second current collector plate connected to the second tab member and a second current collector connected to the second terminal and passing through the second current collector plate.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings:
FIG. 1 is a perspective view schematically illustrating a configuration of a battery pack according to an embodiment of the present invention;
FIG. 2 is a perspective view schematically illustrating a configuration of a secondary battery according to an embodiment of the present invention;
FIG. 3 is an exploded perspective view schematically illustrating a configuration of the secondary battery of FIG. 2;
FIG. 4 is a cross-sectional view schematically illustrating a configuration of the secondary battery of FIG. 2;
FIG. 5 is a view schematically illustrating a configuration of an electrode assembly according to an embodiment of the present invention;
FIG. 6 is an enlarged cross-sectional view schematically illustrating a configuration of a cap assembly according to an embodiment of the present invention;
FIG. 7 is an exploded perspective view schematically illustrating a first connection member according to an embodiment of the present invention;
FIG. 8 is a side view schematically illustrating the first connection member of FIG. 7;
FIG. 9 is a bottom view schematically illustrating the first connection member of FIG. 7;
FIG. 10 is a view schematically illustrating a first current collector guide part according to an embodiment of the present invention;
FIG. 11 is a view schematically illustrating a position-corrected state by the first current collector guide part in FIG. 10;
FIG. 12 is an exploded perspective view schematically illustrating a second connection member according to an embodiment of the present invention;
FIG. 13 is a side view schematically illustrating the second connection member of FIG. 12;
FIG. 14 is a bottom view schematically illustrating the second connection member of FIG. 12;
FIG. 15 is a view schematically illustrating a second current collector guide part according to an embodiment of the present invention; and
FIG. 16 is a view schematically illustrating a position-corrected state by the second current collector guide part in FIG. 15.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

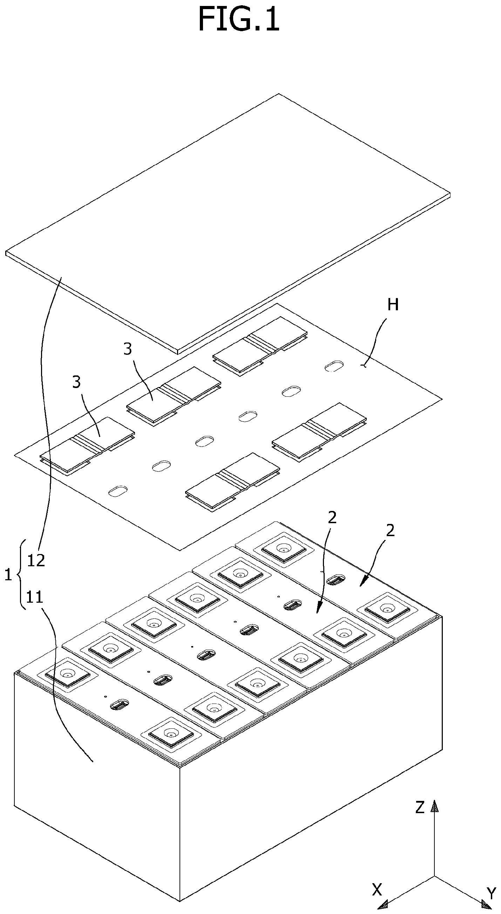

Referring to FIG. 1, a battery pack according to one or more embodiments may include a housing 1, a secondary battery 2, and a bus bar 3.

The housing 1 generally forms an exterior of the battery pack, and may provide a space in which the secondary battery 2 may be accommodated. The housing 1 according to an embodiment may include a housing body 11 and a cover 12.

The housing body 11 may be formed to have a box shape, with an empty interior and an open side. However, a cross-sectional shape of the housing body 11 is not limited to a quadrangular shape, as shown in FIG. 1, and may be changed in design to have any of various shapes, such as a polygonal shape, a circular shape, and an oval shape.

The cover 12 may be coupled to the housing body 11 and may close an internal space of the housing body 11. In an example, the cover 12 may be formed to have a generally plate shape and may be disposed to face the open side of the housing body 11. The cover 12 may be fixed to the housing body 11 by any of various types of coupling methods, such as bolting, welding, and fitting coupling.

The secondary battery 2 may function as a unit structure, which stores and supplies power, in the battery pack.

Herein, the secondary battery 2 according to one or more embodiments of the present invention will be described.

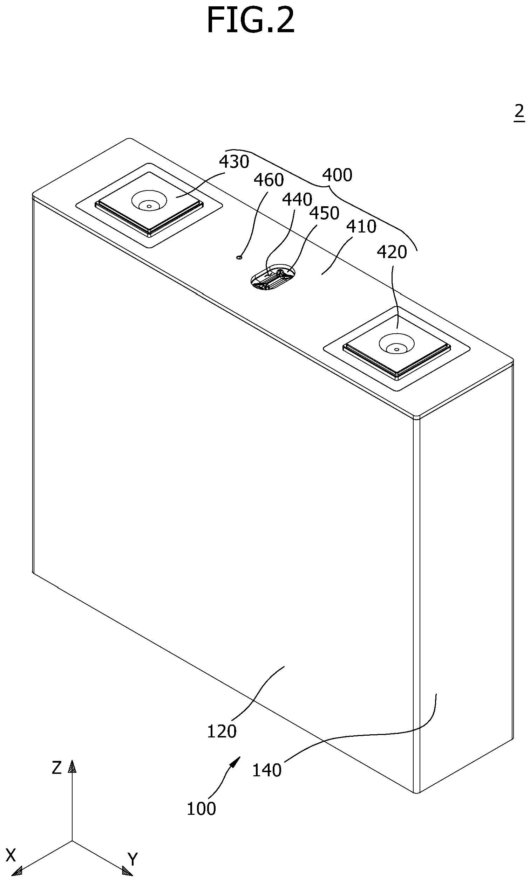

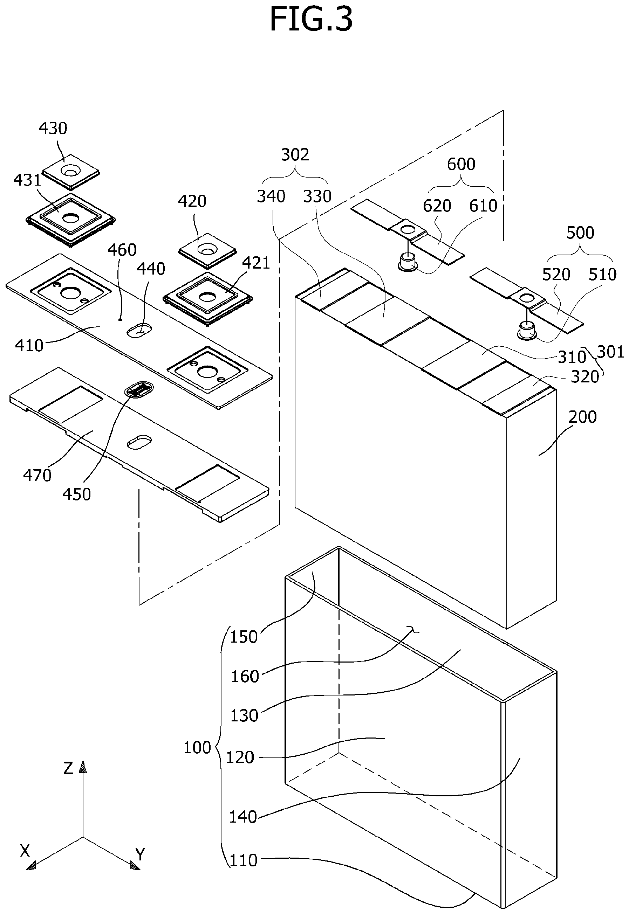

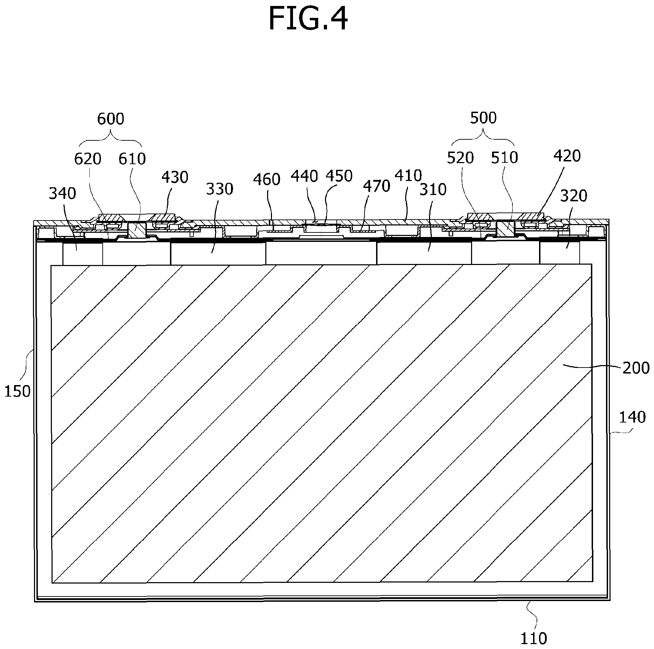

FIG. 2 is a perspective view schematically illustrating a configuration of the secondary battery according to an embodiment of the present invention; FIG. 3 is an exploded perspective view schematically illustrating a configuration of the secondary battery of FIG. 2; and FIG. 4 is a cross-sectional view schematically illustrating a configuration of the secondary battery according to an embodiment of the present invention.

Herein, a case in which the secondary battery is a lithium-ion secondary battery having a prismatic shape will be described as an example. However, the present invention is not limited thereto, and the secondary battery may be a lithium polymer battery or a cylindrical battery, for example.

Referring to FIGS. 2 to 4, the secondary battery 2 according to an embodiment includes a case 100, an electrode assembly 200, a first tab member 301, a cap assembly 400, and a first connection member 500.

The case 100 generally forms an exterior of the secondary battery 2 and may accommodate the electrode assembly 200.

The case 100 according to an embodiment may include a bottom portion 110, a front surface portion 120, a rear surface portion 130, a first side surface portion 140, and a second side surface portion 150.

The bottom portion 110 may form a lower exterior of the case 100 (based on FIG. 3). The bottom portion 110 according to an embodiment may have a rectangular plate shape. The bottom portion 110 may be seated on a bottom surface of the housing body 11.

The front surface portion 120, the rear surface portion 130, the first side surface portion 140, and the second side surface portion 150 may form a perimeter exterior of the case 100.

The front surface portion 120, the rear surface portion 130, the first side surface portion 140, and the second side surface portion 150 according to an embodiment may have a form of plates extending upward (based on FIG. 3) from edges of the bottom portion 110. The front surface portion 120, the rear surface portion 130, the first side surface portion 140, and the second side surface portion 150 may be disposed to surround an upper space of the bottom portion 110. In an embodiment, the front surface portion 120, the rear surface portion 130, the first side surface portion 140, and the second side surface portion 150 may be disposed to form a rectangular cross-sectional shape.

The front surface portion 120 and the rear surface portion 130 may be disposed to face each other in a length direction of the housing 1. The front surface portion 120 and the rear surface portion 130 may be disposed parallel to each other. In an embodiment, the front surface portion 120 and the rear surface portion 130 may have a same area.

The first side surface portion 140 and the second side surface portion 150 may be disposed to face each other in a width direction of the housing 1. The first side surface portion 140 and the second side surface portion 150 may be disposed parallel to each other. In an embodiment, the first side surface portion 140 and the second side surface portion 150 may have a same area. The first side surface portion 140 and the second side surface portion 150 may each have a smaller area than each of the front surface portion 120 and the rear surface portion 130.

The case 100 may further include an opening 160. The opening 160 according to an embodiment may refer to a space enclosed by the upper end portions of the front surface portion 120, the rear surface portion 130, the first side surface portion 140, and the second side surface portion 150. The opening 160 interconnects the internal and external spaces of the case 100.

Accordingly, the case 100 according to an embodiment may have a rectangular parallelepiped shape with an open upper side.

As described herein, a first direction may refer to a direction that is parallel to a Z-axis based on FIGS. 3 and 4 and extends from the bottom portion 110 toward the opening 160. A second direction may refer to a direction that is parallel to a Y-axis based on FIGS. 3 and 4 and extends from the first side surface portion 140 toward the second side surface portion 150. A third direction may refer to a direction that is parallel to an X-axis based on FIGS. 3 and 4 and extends from the front surface portion 120 toward the rear surface portion 130.

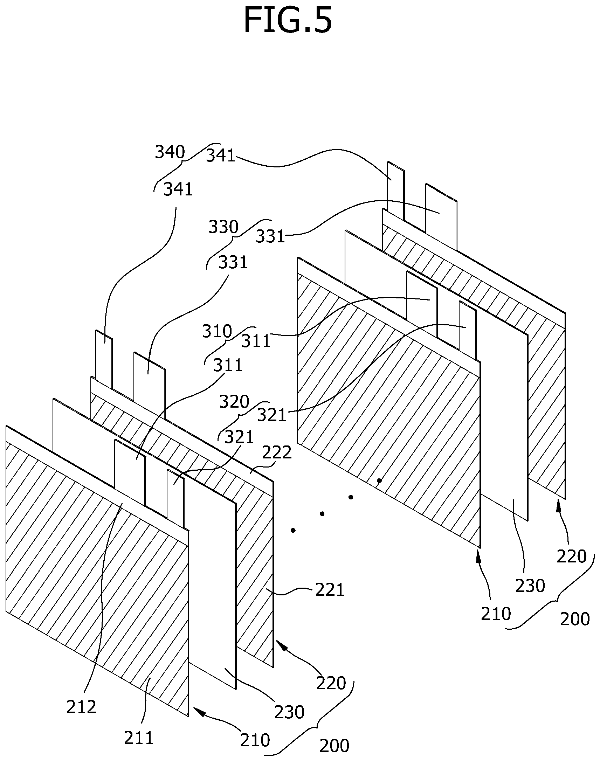

The electrode assembly 200 may function as a unit structure for performing a power charging and discharging operation in the secondary battery. The electrode assembly 200 may be accommodated inside the case 100. FIG. 5 is a view schematically illustrating a configuration of an electrode assembly according to an embodiment of the present invention;

Referring to FIGS. 2 to 4, the electrode assembly 200 according to an embodiment may include a first electrode 210, a second electrode 220, and a separator 230 disposed between the first electrode 210 and the second electrode 220. In an embodiment, the first electrode 210, the separator 230, and the second electrode 220 may each be provided in plural.

Herein, a case in which the electrode assembly 200 has a stack form in which a plurality of first electrodes 210, a plurality of separators 230, and a plurality of second electrodes 220 are stacked sequentially in the third direction will be described as an example. However, the electrode assembly 200 is not limited to the form described above, and may be formed in such a way that the first electrode 210, the separator 230, and the second electrode 220 are stacked and then wound around a winding axis in a clockwise or counterclockwise direction.

The first electrode 210 may function as one of a positive electrode or a negative electrode of the electrode assembly 200. Herein, a case in which the first electrode 210 is a positive electrode of the electrode assembly 200 will be described as an example. However, the first electrode 210 is not limited to thereto, and may function as a negative electrode of the electrode assembly 200.

The first electrode 210 according to an embodiment may be formed in a form of a foil including a metal material, such as aluminium or an aluminium alloy. A type, size, and shape of the first electrode 210 are not particularly limited, as long as the first electrode 210 has conductivity and does not cause chemical changes in the secondary battery. However, a cross-sectional shape of the first electrode 210 may be changed in design to any of various shapes other than a rectangular shape, as shown in FIG. 5.

In an embodiment, a plurality of first electrodes 210 may be provided. The plurality of first electrodes 210 may be arranged in the third direction between the front surface portion 120 and the rear surface portion 130 of the case 100. A number of the first electrodes 210 may be varied in design according to a charging capacity or the like of the secondary battery 2.

A first active material layer 211 may be applied to at least a portion of the first electrode 210. The first active material layer 211 may be applied to both, or opposite, surfaces of the first electrode 210, or may be applied to only one surface of the first electrode 210.

In an embodiment, the first electrode 210 functions as a positive electrode, and the first active material layer 211 may include a positive electrode active material.

The positive electrode active material may include a compound (lithiated intercalation compound) capable of reversibly intercalating and deintercalating lithium. In an embodiment, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of LiFePO₄, LiMnFePO₄, and LiNiₓCo_{y}Mn_{z}O₂, and may also include two or all of LiFePO₄, LiMnFePO₄, and LiNiₓCo_{y}Mn_{z}O₂.

The first active material layer 211 may further include a positive electrode conductive material.

The positive electrode conductive material is used to impart conductivity to the first active material layer 211, and any electrically conductive material that does not cause a chemical change in the battery may be used. Examples of the positive electrode conductive material may include a carbon-based material, such as natural graphite, artificial graphite, carbon black, acetylene black, Ketjen black, carbon fiber, carbon nanofiber, carbon nanotubes, and the like; a metal-based material in the form of a metal powder or metal fiber including copper, nickel, aluminium, silver, and the like; a conductive polymer such as a polyphenylene derivative; or a mixture thereof.

The first active material layer 211 may further include a positive electrode binder.

The positive electrode binder adheres particles constituting the positive electrode active material to each other well, and adheres the positive electrode active material to the first electrode 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoridehexafluoropropylene copolymer, a polyethylene oxide, or a combination thereof.

The first electrode 210 may include a first uncoated portion 212 to which the first active material layer 211 is not applied. The first uncoated portion 212 according to an embodiment may be disposed at an upper end region of the first electrode 210, which is disposed to face the opening 160 from inside the case 100. However, the first uncoated portion 212 is not limited to such a form, and, in an embodiment, may be formed across an entire edge region of the first electrode 210.

The second electrode 220 can function as the other one of the positive electrode and the negative electrode of the electrode assembly 200. Herein, a case in which the second electrode 220 is the negative electrode of the electrode assembly 200 will be described as an example. However, the second electrode 220 is not limited thereto, and may function as the positive electrode of the electrode assembly 200.

In an embodiment, a plurality of second electrodes 220 may be provided. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be spaced apart from the first electrode 210 by a distance (e.g., a predetermined distance) in the third direction.

The second electrode 220 according to an embodiment may be formed in a form of a foil including a metal material, such as copper, a copper alloy, nickel, or a nickel alloy. A type, size, and shape of the second electrode 220 are not particularly limited, as long as the second electrode 220 has conductivity and does not cause chemical changes in the secondary battery. A cross-sectional shape of the second electrode 220 may be changed in design to any of various shapes other than a rectangular shape, as shown in FIG. 5.

A second active material layer 221 may be applied to at least a portion of the second electrode 220. The second active material layer 221 may be applied to both, or opposite, surfaces of the second electrode 220, or may be applied to only one surface of the second electrode 220. In an embodiment, the second electrode 220 functions as the negative electrode, and the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite, such as amorphous (i.e. non-shaped), plateshaped, flake-shaped, spherical-shaped or fiber-shaped natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOx (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, an Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material is used to impart conductivity to the second active material layer 221, and any electrically conductive material that does not cause a chemical change in the battery may be used. Examples of the negative electrode conductive material may include a carbon-based material, such as natural graphite, artificial graphite, carbon black, acetylene black, Ketjen black, carbon fiber, carbon nanofiber, carbon nanotubes, and the like, a metal-based material in the form of a metal powder or metal fiber including copper, nickel, aluminium, silver, and the like, a conductive polymer such as a polyphenylene derivative, or a mixture thereof.

The negative electrode binder adheres particles constituting the negative electrode active material to each other well, and adheres the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. In an embodiment, Na, K, or Li can be used as the alkali metal.

The dry binder is a polymer material capable of being fiberized, and may be, for example, polytetrafluoroethylene, polyvinylidene fluoride, a polyvinylidene fluoridehexafluoropropylene copolymer, a polyethylene oxide, or a combination thereof.

The second electrode 220 may include a second uncoated portion 222 to which a second active material layer 221 is not applied. The second uncoated portion 222 according to an embodiment may be disposed at an upper end region of the second electrode 220 disposed to face the opening 160 from inside the case 100. However, the second uncoated portion 222 is not limited to such a form, and, in an embodiment, may be formed across an entire edge region of the second electrode 220.

The separator 230 may be disposed between the first electrode 210 and the second electrode 220. The separator 230 may prevent or substantially prevent short circuiting of the first electrode 210 and the second electrode 220 while allowing the movement of lithium ions between the first electrode 210 and the second electrode 220.

In an embodiment, the separator 230 may be disposed to cover an entire surface region of the electrode assembly 200. Accordingly, the separator 230 may prevent or substantially prevent the first electrode 210 and the second electrode 220 from being directly exposed to the outside of the electrode assembly 200.

In an embodiment, the separator 230 may be made of polyethylene, polypropylene, polyvinylidene fluoride, or a multilayer film of two or more layers thereof, and may be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as any of polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, and polytetrafluoroethylene (e.g., Teflon).

The organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but the present invention is not limited thereto.

The organic and inorganic materials may be present by being mixed in a coating layer or may be present in a form in which a coating layer including organic materials and a coating layer including inorganic materials are stacked.

The first tab member 301 is connected to the first electrode 210, and may protrude outward from the electrode assembly 200. As the first electrode 210, in an embodiment, is the positive electrode, the first tab member 301 may be a positive electrode tab of the secondary battery 2. However, the first tab member 301 is not limited thereto, and may be a negative electrode tab of the secondary battery 2 if the first electrode 210 is a negative electrode.

The first tab member 301 according to an embodiment may extend in the first direction from the electrode assembly 200. That is, the first tab member 301 may extend toward the opening 160 from inside the case 100.

The first tab member 301 according to an embodiment may include a first inner tab member 310 and a first outer tab member 320.

The first inner tab member 310 and the first outer tab member 320 may be spaced apart from each other in the second direction. In an example, the first outer tab member 320 and the first inner tab member 310 may be disposed sequentially in the second direction. That is, the first outer tab member 320 may be disposed at a position spaced apart from the first inner tab member 310 by a distance (e.g., a predetermined distance) in a direction opposite to the second direction. The first outer tab member 320 may be disposed at a position relatively closer to the first side surface portion 140 than the first inner tab member 310.

The first inner tab member 310 may include a first inner tab 311.

The first inner tab 311 according to an embodiment may have a form of a foil extending in the first direction from the first uncoated portion 212 of the first electrode 210. The first inner tab 311 may have a generally rectangular shape. However, a shape of the first inner tab 311 is not limited thereto, and may be variously changed in design.

In an embodiment, the first inner tab 311 may be integrally formed with the first electrode 210. For example, the first inner tab 311 may be a remaining region of the first uncoated portion 212 after a partial region of the first uncoated portion 212 has been cut or removed through processes such as notching. In an embodiment, the first inner tab 311 may be fabricated separately from the first electrode 210 and then connected to the first uncoated portion 212 by welding or the like. A material of the first inner tab 311 may be the same as a material of the first electrode 210.

In an embodiment, a plurality of first inner tabs 311 may be provided. A number of the first inner tabs 311 may be the same as a number of the first electrodes 210. The first inner tabs 311 may individually extend from the first uncoated portions 212 of the different first electrodes 210, respectively. The adjacent first inner tabs 311 may be disposed to face each other in the third direction. The adjacent first inner tabs 311 may be disposed parallel to each other. Accordingly, the first inner tab member 310 according to an embodiment may be an assembly of the plurality of first inner tabs 311 stacked in the third direction. The adjacent first inner tabs 311 may be in contact with each other and may be spaced apart from each other by a thickness of the separator 230.

The first outer tab member 320 may include a first outer tab 321.

The first outer tab 321 according to the present embodiment may have a form of a foil extending in the first direction from the first uncoated portion 212 of the first electrode 210. The first outer tab 321 may be disposed at a position spaced apart from the first inner tab 311 by a distance (e.g., a predetermined distance) in a direction opposite to the second direction. The first outer tab 321 may have a generally rectangular shape. However, the shape of the first outer tab 321 is not limited thereto, and may be variously changed in design.

In an embodiment, the first outer tab 321 may be integrally formed with the first electrode 210. For example, the first outer tab 321 may be a region excluding the first inner tab 311 from a remaining region of the first uncoated portion 212 after a partial region of the first uncoated portion 212 has been cut or removed through processes such as notching. In an embodiment, the first outer tab 321 may be fabricated separately from the first electrode 210 and then connected to the first uncoated portion 212 by welding or the like. A material of the first outer tab 321 may be the same as a material of the first electrode 210.

In an embodiment, a plurality of first outer tabs 321 may be provided. A number of the first outer tabs 321 may be the same as a number of the first electrodes 210. The first outer tabs 321 may individually extend from the first uncoated portions 212 of the different first electrodes 210, respectively. The adjacent first outer tabs 321 may be disposed to face each other in the third direction. The adjacent first outer tabs 321 may be disposed parallel to each other. Accordingly, the first outer tab member 320 according to an embodiment may be an assembly of the plurality of first outer tabs 321 stacked in the third direction. The adjacent first outer tabs 321 may be in contact with each other and may be spaced apart from each other by the thickness of the separator 230.

The secondary battery 2 according to an embodiment may further include a second tab member 302.

The second tab member 302 is connected to the second electrode 220, and may protrude outward from the electrode assembly 200. In an embodiment, the second electrode 220 is a negative electrode, and the second tab member 302 may be a negative electrode tab of the secondary battery 2. However, the second tab member 302 is not limited thereto, and may be a positive electrode tab of the secondary battery 2 if the second electrode 220 is a positive electrode.

The second tab member 302 according to an embodiment may extend in the first direction from the electrode assembly 200. That is, the second tab member 302 may extend toward the opening 160 from inside the case 100.

The first tab member 301 and the second tab member 302 may be disposed to be spaced apart from each other in the second direction. In an example, the second tab member 302 may be disposed at a position spaced apart from the first tab member 301 in the second direction by a distance (e.g., a predetermined distance).

The second tab member 302 according to an embodiment may include a second inner tab member 330 and a second outer tab member 340.

The second inner tab member 330 and the second outer tab member 340 may be spaced apart from each other in the second direction. In an example, the second inner tab member 330 and the second outer tab member 340 may be disposed sequentially in the second direction. That is, the second outer tab member 340 may be disposed at a position spaced apart from the second inner tab member 330 by a distance (e.g., a predetermined distance) in the second direction. The second outer tab member 340 may be disposed at a position relatively closer to the second side surface portion 150 than the second inner tab member 330.

The second inner tab member 330 may include a second inner tab 331.

The second inner tab 331 according to an embodiment may have a form of a foil extending in the first direction from the second uncoated portion 222 of the second electrode 220. The second inner tab 331 may have a generally rectangular shape. However, the shape of the second inner tab 331 is not limited thereto, and may be variously changed in design.

In an embodiment, the second inner tab 331 may be integrally formed with the second electrode 220. For example, the second inner tab 331 may be a remaining region of the second uncoated portion 222 after a partial region of the second uncoated portion 222 has been cut or removed through processes such as notching. In an embodiment, the second inner tab 331 may be fabricated separately from the second electrode 220 and then connected to the second uncoated portion 222 by welding or the like. In an embodiment, a material of the second inner tab 331 may be the same as a material of the second electrode 220.

In an embodiment, a plurality of second inner tabs 331 may be provided. A number of the second inner tabs 331 may be the same as a number of the second electrodes 220. The second inner tabs 331 may individually extend from the second uncoated portions 222 of the different second electrodes 220, respectively. The adjacent second inner tabs 331 may be disposed to face each other in the third direction. The adjacent second inner tabs 331 may be disposed parallel to each other. Accordingly, the second inner tab member 330 according to an embodiment may be an assembly of the plurality of second inner tabs 331 stacked in the third direction. The adjacent second inner tabs 331 may be in contact with each other and may be spaced apart from each other by the thickness of the separator 230.

The second outer tab member 340 may include a second outer tab 341.

The second outer tab 341 according to an embodiment may have a form of a foil extending in the first direction from the second uncoated portion 222 of the second electrode 220. The second outer tab 341 may be disposed at a position spaced apart from the second inner tab 331 by a distance (e.g., a predetermined distance) in the second direction. The second outer tab 341 may have a generally rectangular shape. However, a shape of the second outer tab 341 is not limited thereto, and may be variously changed in design.

In an embodiment, the second outer tab 341 may be integrally formed with the second electrode 220. For example, the second outer tab 341 may be a region excluding the second inner tab 331 from a remaining region of the second outer tab 341 after a partial region of the second uncoated portion 222 has been cut or removed through processes such as notching. In an embodiment, the second outer tab 341 may be fabricated separately from the second electrode 220 and then connected to the second uncoated portion 222 by welding or the like. In an embodiment, a material of the second outer tab 341 may be the same as a material of the second electrode 220.

In an embodiment, a plurality of second outer tabs 341 may be provided. A number of the second outer tabs 341 may be the same as a number of the second electrodes 220. The second outer tabs 341 may individually extend from the second uncoated portions 222 of the different second electrodes 220, respectively. The adjacent second outer tabs 341 may be disposed to face each other in the third direction. The adjacent second outer tabs 341 may be disposed parallel to each other. Accordingly, the second outer tab member 340 according to an embodiment may be an assembly of the plurality of second outer tabs 341 stacked in the third direction. The adjacent second outer tabs 341 may be in contact with each other and may be spaced apart from each other by the thickness of the separator 230.

The cap assembly 400 may be coupled to the case 100 and may seal the case 100. The cap assembly 400 may be disposed to face the electrode assembly 200 in the first direction.

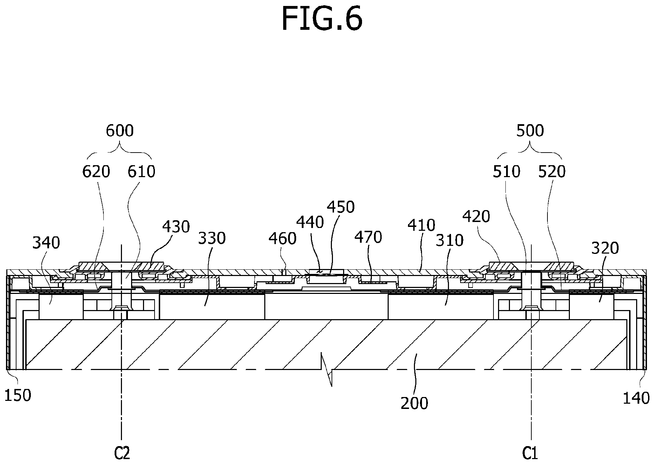

FIG. 6 is an enlarged cross-sectional view schematically illustrating a configuration of a cap assembly according to an embodiment of the present invention;

Referring to FIGS. 2 to 6, the cap assembly 400 according to an embodiment may include a cap plate 410, a first terminal 420, and a second terminal 430.

The cap plate 410 generally forms an exterior of the cap assembly 400, and may support (e.g., entirely support) the first terminal 420 and the second terminal 430.

The cap plate 410 according to an embodiment may be formed to have a shape of a flat plate. The cap plate 410 may be disposed in the opening 160 of the case 100. The cap plate 410 may be disposed to face the electrode assembly 200 in the first direction. That is, the cap plate 410 may be disposed at a position spaced apart from the electrode assembly 200 by a distance (e.g., a predetermined distance) in the first direction. The cap plate 410 may be disposed parallel to the bottom portion 110 of the case 100.

The cap plate 410 may be seated on an upper end portion of the case 100, and, in an embodiment, on upper end portions of the front surface portion 120, the rear surface portion 130, the first side surface portion 140, and the second side surface portion 150. The cap plate 410 may be coupled to the case 100 by any of various types of coupling methods, such as welding, bolting, and fitting coupling.

The first terminal 420 may protrude outward from the cap plate 410. The first terminal 420 may be electrically connected to the first electrode 210. As the first electrode 210 according to an embodiment functions as the positive electrode, the first terminal 420 may be a positive electrode terminal of the secondary battery 2.

The first terminal 420 according to an embodiment may be inserted into the cap plate 410. An upper end portion of the first terminal 420 may protrude from the cap plate 410 in the first direction. In FIG. 3, the first terminal 420 is illustrated as having a rectangular cross-sectional shape, as an example, but a cross-sectional shape of the first terminal 420 is not limited thereto, and may be changed in design to any of various shapes, such as a circular, elliptical, or polygonal shape. The first terminal 420 may be formed of an electrically conductive material, such as aluminium, nickel, copper, or the like.

A first terminal axis C1, which passes through a central portion of the first terminal 420 in the first direction, may be disposed between the first inner tab member 310 and the first outer tab member 320.

A first gasket 421 may be installed between the cap plate 410 and the first terminal 420. The first gasket 421 may electrically isolate the cap plate 410 from the first terminal 420, and may prevent or substantially prevent moisture or foreign substances from entering between the cap plate 410 and the first terminal 420.

The first gasket 421 according to an embodiment may be formed of an insulating material, such as polyethylene (PE), polypropylene (PP), polyethylene terephthalate (PET), rubber, or the like. The first gasket 421 may be fixed between the cap plate 410 and the first terminal 420 by press-fitting, injection molding, adhesion, or the like.

The second terminal 430 may protrude outward from the cap plate 410 at a position spaced apart from the first terminal 420. The second terminal 430 may be electrically connected to the second electrode 220. As the second electrode 220 according to an embodiment functions as the negative electrode, the second terminal 430 may be a negative electrode terminal of the secondary battery 2.

The second terminal 430 according to an embodiment may be inserted into the cap plate 410. An upper end portion of the second terminal 430 may protrude from the cap plate 410 in the first direction. In FIG. 3, the second terminal 430 is illustrated as having a rectangular cross-sectional shape, as an example, but the cross-sectional shape of the second terminal 430 is not limited thereto, and may be changed in design to any of various shapes, such as a circular, elliptical, or polygonal shape. The second terminal 430 may be formed of an electrically conductive material, such as aluminium, nickel, copper, or the like.

The second terminal 430 may be disposed at a position spaced apart from the first terminal 420 by a distance (e.g., a predetermined distance) in the second direction. A second terminal axis C2, which passes through a central portion of the second terminal 430 in the first direction, may be disposed between the second inner tab member 330 and the second outer tab member 340.

In an embodiment, a distance between the first terminal axis C1 and the second terminal axis C2 may be greater than or equal to 145 mm and less than or equal to 190 mm. In an embodiment, the distance between the first terminal axis C1 and the second terminal axis C2 may be 149.1 mm.

A second gasket 431 may be installed between the cap plate 410 and the second terminal 430. The second gasket 431 may electrically isolate the cap plate 410 from the second terminal 430 and prevent or substantially prevent moisture or foreign substances from entering between the cap plate 410 and the second terminal 430.

The second gasket 431 according to an embodiment may be formed of an insulating material, such as polyethylene (PE), polypropylene (PP), polyethylene terephthalate (PET), rubber, or the like. The second gasket 431 may be fixed between the cap plate 410 and the first terminal 420 by press-fitting, injection molding, adhesion, or the like.

The cap assembly 400 according to an embodiment may further include a vent hole 440 and a vent 450.

The vent hole 440 according to the present embodiment may be formed to have the shape of a hole vertically passing through both, or opposite, surfaces of the cap plate 410 in the first direction. The vent hole 440 may provide a path for flames, gases, smoke, or the like formed inside the case 100 to be discharged to the outside of the case 100 in the event of a thermal runaway of the secondary battery 2 due to overcurrent or the like. The vent hole 440 may be disposed between the first terminal 420 and the second terminal 430. A cross-sectional shape of the vent hole 440 may be changed in design into any of various shapes, such as an oval shape, a circular shape, and a polygonal shape.

The vent 450 is installed in the vent hole 440, and may open and close in response to changes in an internal pressure of the case 100. That is, the vent 450 may close the vent hole 440 during a normal operation of the secondary battery 2 to prevent or substantially prevent the electrolyte or the like inside the case 100 from leaking out of the case 100, or to block moisture, foreign substances, or the like from entering the case 100. The vent 450 may open the vent hole 440 during thermal runaway of the secondary battery 2 to guide flames, gases, smoke, or the like formed inside the case 100 to be discharged to the outside of the case 100.

The vent 450 according to an embodiment may be formed to have a generally plate shape. The vent 450 may be fixed to the cap plate 410 by any of various types of coupling methods, such as welding, bolting, and fitting coupling. The vent 450 may be disposed inside the vent hole 440, or may be disposed above or below the cap plate 410 to face the vent hole 440 in the first direction.

A thickness of the vent 450 in the first direction may be less than a thickness of the cap plate 410. Accordingly, the vent 450 may easily rupture or fracture when the internal pressure of the case 100 rises. In an embodiment, the vent 450 may include a notch formed to be recessed inward of the vent 450 to preferentially fracture when the internal pressure of the case 100 rises.

The cap assembly 400 according to the present embodiment may further include an electrolyte injection port 460 which is formed through the cap plate 410 and in which a sealing cap may be installed. The electrolyte injection port 460 may be disposed to be spaced apart by a predetermined distance from the vent hole 440 in the second direction or in the direction opposite to the second direction. The electrolyte injection port 460 may be disposed between the first terminal 420 and the second terminal 430.

The cap assembly 400 according to the present embodiment may further include an insulating plate 470.

The insulating plate 470 may be disposed between the cap plate 410 and the electrode assembly 200. The insulating plate 470 may insulate the cap plate 410 from the electrode assembly 200 by preventing or substantially preventing direct contact therebetween. The insulating plate 470 may fix the position of the electrode assembly 200 inside the case 100. The insulating plate 470 may prevent or substantially prevent the electrode assembly 200 from breaking when the cap plate 410 is deformed inwardly of the case 100, such as by an external impact.

The insulating plate 470 according to an embodiment may be disposed inside the case 100 to face the electrode assembly 200 in the first direction. That is, the electrode assembly 200, the insulating plate 470, and the cap plate 410 may be sequentially disposed in the first direction. The insulating plate 470 may be fixed to an inner side surface of the case 100 by any of various types of coupling methods, such as fitting coupling, welding, bolting, adhesion, and the like. The insulating plate 470 may be in contact with a surface of the electrode assembly 200 from which the first tab member 301 and the second tab member 302 extend. The insulating plate 470 may be formed of an insulating material, such as polyethylene (PE), polypropylene (PP), polyethylene terephthalate (PET), rubber, or the like.

The first connection member 500 may be disposed between the electrode assembly 200 and the cap assembly 400. The first connection member 500 may be connected to the first terminal 420 and the first tab member 301. The first connection member 500 may electrically connect the first terminal 420 and the first tab member 301. The first connection member 500 may be formed of an electrically conductive material. In an embodiment, the first connection member 500 may be formed of a same material as the first terminal 420.

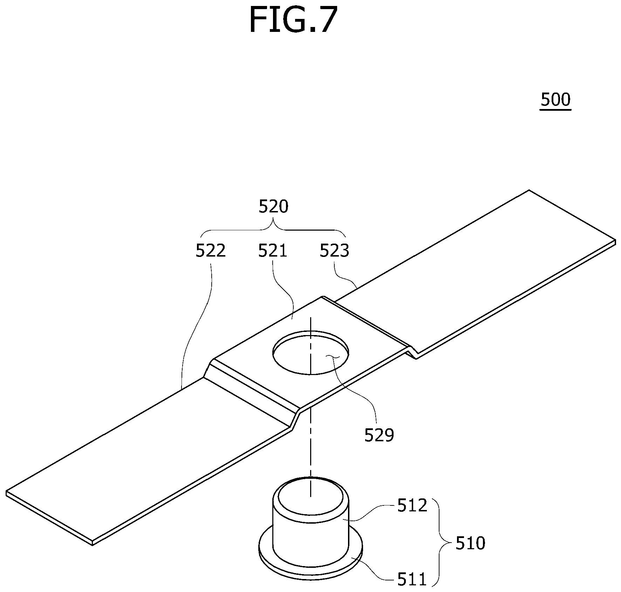

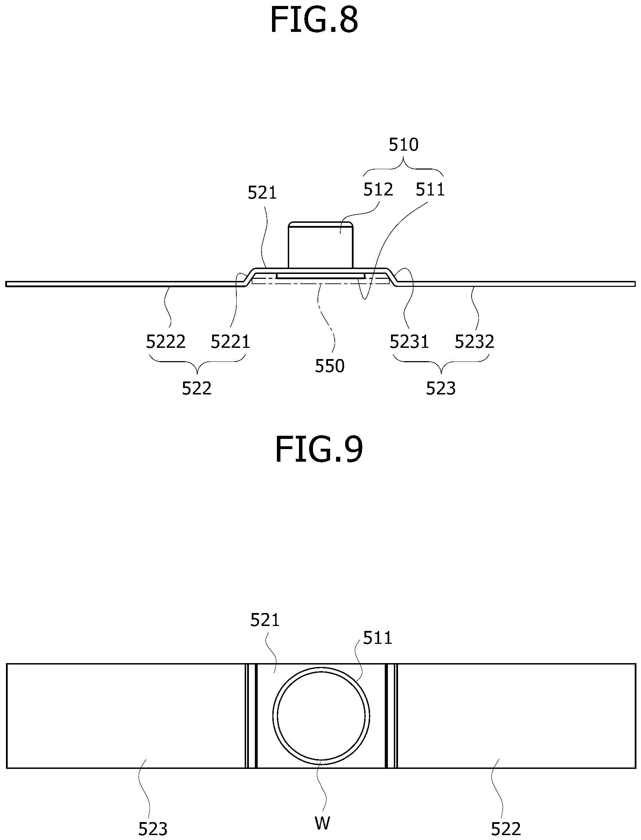

FIG. 7 is an exploded perspective view schematically illustrating the first connection member according to an embodiment of the present invention; FIG. 8 is a side view schematically illustrating the first connection member according to an embodiment of the present invention; and FIG. 9 is a bottom view schematically illustrating the first connection member according to an embodiment of the present invention. Referring to FIGS. 2 to 9, the first connection member 500 according to an embodiment may include a first current collector 510 and a first current collector plate 520. The first current collector 510 may be welded to a bottom surface of the first current collector plate 520.

The first current collector 510 may be connected to the first terminal 420 by passing through the first current collector plate 520. The first current collector plate 520 may be connected to the first tab member 301.

The first current collector 510 according to an embodiment may include a first body 511 and a first boss 512.

The first body 511 forms a side of the exterior of the first current collector 510, and may support the first boss 512.

The first body 511 according to an embodiment may be disposed between the electrode assembly 200 and the first current collector plate 520. The first body 511 may be spaced apart from a lower surface of the first terminal 420 by a distance (e.g., a predetermined distance) in the first direction. The first terminal axis C1 may pass through a central portion of the first body 511. In an embodiment, a cross-section of the first body 511 may have a circular band or disk shape. In addition, the first body 511 may be changed in design to have any of various shapes, such as an oval shape, a polygonal shape, and the like.

The first boss 512 extends from the first body 511, and may be connected to the first terminal 420. The first boss 512 may pass through the first current collector plate 520.

The first boss 512 according to an embodiment may have a form of a cylinder extending in the first direction from the first body 511. A central axis of the first boss 512 may be positioned to be coaxial with the first terminal axis C1. An upper end surface of the first boss 512 may be in contact with the lower surface of the first terminal 420. In an embodiment, the upper end surface of the first boss 512 may be bonded to the lower surface of the first terminal 420 by laser welding. A cross-sectional shape of the first boss 512 may be variously changed in design, such as an oval shape, a polygonal shape, and the like, in addition to a circular shape.

The first current collector plate 520 is fixed to the first current collector 510, and may be connected to the first tab member 301. In an embodiment, the first current collector 510 may be brought into surface contact with the bottom surface of the first current collector plate 520 and then laser welded.

The first current collector plate 520 according to an embodiment may include a first center plate 521, a first inner plate 522, and a first outer plate 523.

The first center plate 521 forms a central portion of the exterior of the first current collector plate 520, and may be connected to the first current collector 510. The first center plate 521 according to an embodiment may be disposed between the first terminal 420 and the first body 511. A bottom surface of the first center plate 521 is positioned on the opposite side of the first boss 512, and may come into contact with an upper surface of the first body 511. A first center hole 529 may be formed in the first center plate 521. The first center hole 529 may be disposed in a central portion of the first center plate 521.

The first inner plate 522 may extend in the second direction from an end portion of the first center plate 521. The first inner plate 522 may be disposed to face the first inner tab member 310 in the first direction. The first inner plate 522 may be in contact with an end surface of the first inner tab member 310.

In an embodiment, the first inner tab member 310 and the first inner plate 522 may be bonded to each other by laser welding.

The first outer plate 523 may extend in the second direction from another end portion of the first center plate 521. The first outer plate 523 may be disposed to face the first outer tab member 320 in the first direction. The first outer plate 523 may be in contact with an end surface of the first outer tab member 320.

In an embodiment, the first outer tab member 320 and the first outer plate 523 may be bonded to each other by laser welding.

The first inner plate 522 may include a first inner inclined plate 5221 and a first inner horizontal plate 5222. The first inner inclined plate 5221 may extend downwardly at an angle from the first center plate 521. The first inner horizontal plate 5222 may extend horizontally from the first inner inclined plate 5221. A length of the first inner horizontal plate 5222 in the second direction may be designed to be longer than a length of the first center plate 521 in the second direction.

The first outer plate 523 may include a first outer inclined plate 5231 and a first outer horizontal plate 5232. The first outer inclined plate 5231 may extend downwardly at an angle from the first center plate 521. The first outer horizontal plate 5232 may extend horizontally from the first outer inclined plate 5231. A length of the first outer horizontal plate 5232 in the second direction may be designed to be longer than the length of the first center plate 521 in the second direction.

In an embodiment, a circular weld line W is formed by laser welding the upper surface of the first body 511 to the bottom surface of the first center plate 521. As the first boss 512 passes through the first center hole 529, the upper surface of the first body 511 may come into surface contact with the bottom surface of the first center plate 521. The first body 511 and the first center plate 521 can maintain a coupled state due to the single circular weld line W.

In an embodiment, a thickness of the first body 511 may be in a range from 0.4 mm to 1 mm. The thickness of the first body 511 may correspond to, be greater than, or be less than a thickness of the first current collector plate 520. In an embodiment, the first body 511 has a circular shape and a thin thickness, which can reduce material costs.

If the first body 511 is coupled to the first current collector plate 520, a height of the first body 511 is greater than a height of each of the first inner horizontal plate 5222 and the first outer horizontal plate 5232. Accordingly, the first body 511 and the electrode assembly 200 may become spaced apart from each other.

The first connection member 500 according to an embodiment of the present invention may further include a first insulating pad 550. The first insulating pad 550 may be disposed between the first current collector 510 and the electrode assembly 200. The first insulating pad 550 may be made of an insulating material. The first insulating pad 550 may be attached to the bottom surface of the first body 511, or may be attached to the electrode assembly 200. The first insulating pad 550 may prevent or substantially prevent the first body 511 and the electrode assembly 200 from coming into contact with each other, which may occur due to component damage, for example.

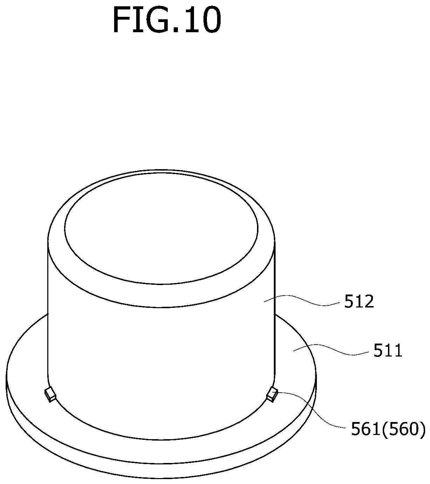

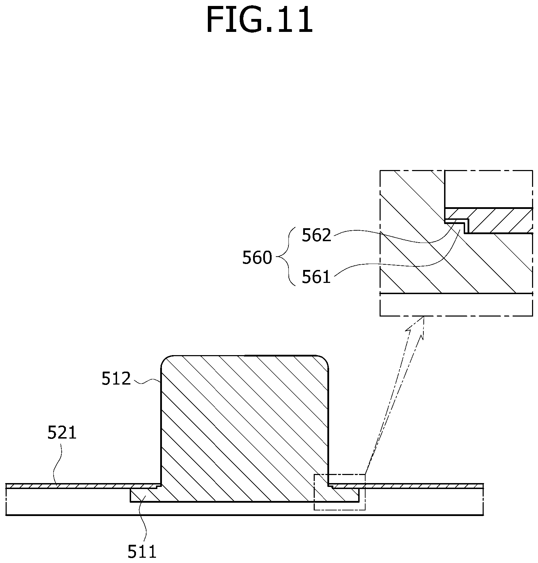

FIG. 10 is a view schematically illustrating a first current collector guide part according to an embodiment of the present invention; and FIG. 11 is a view schematically illustrating a position-corrected state by the first current collector guide part in FIG. 10. Referring to FIGS. 10 and 11, the first connection member 500 according to an embodiment of the present invention may further include a first current collector guide part 560.

The first current collector guide part 560 may guide an assembly position of the first current collector 510 and the first current collector plate 520. The first current collector guide part 560 may include a first guide protrusion 561 and a first guide groove 562.

The first guide protrusion 561 may be formed on the first current collector 510. The first guide protrusion 561 may be disposed at a lower end of the first boss 512. One or more first guide protrusions 561 may be provided.

The first guide groove 562 is formed in the first current collector plate 520, and the first guide protrusion 561 may be inserted into the first guide groove 562. The first guide groove 562 may be formed in the first center plate 521 corresponding to a periphery of the first center hole 529.

When the first boss 512 passes through the first center hole 529 and the first body 511 is in contact (e.g., close contact) with the first center plate 521, the first guide protrusion 561 may be inserted into the first guide groove 562. As a result, a coupling position of the first body 511 and the first center plate 521 may be guided.

The secondary battery 2 according to an embodiment may further include a second connection member 600. The second connection member 600 may be disposed between the electrode assembly 200 and the cap assembly 400. The second connection member 600 may be connected to the second terminal 430 and the second tab member 302. The second connection member 600 may electrically connect the second terminal 430 and the second tab member 302. The second connection member 600 may be formed of an electrically conductive material. In an embodiment, the second connection member 600 may be formed of a same material as the second terminal 430.

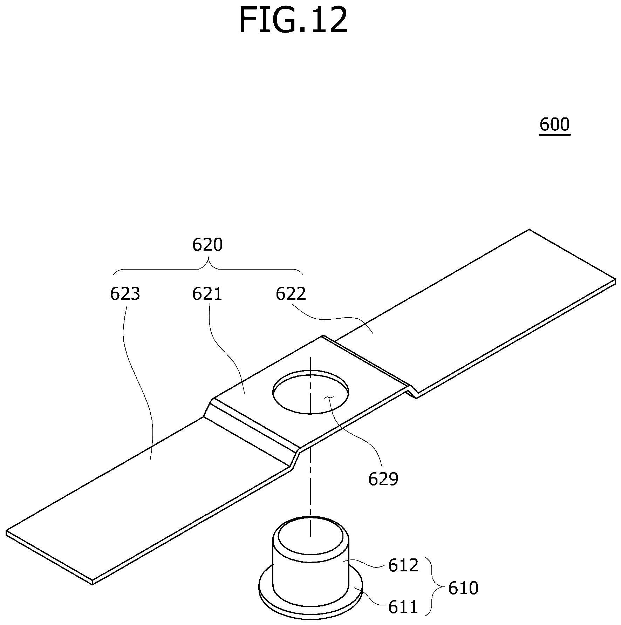

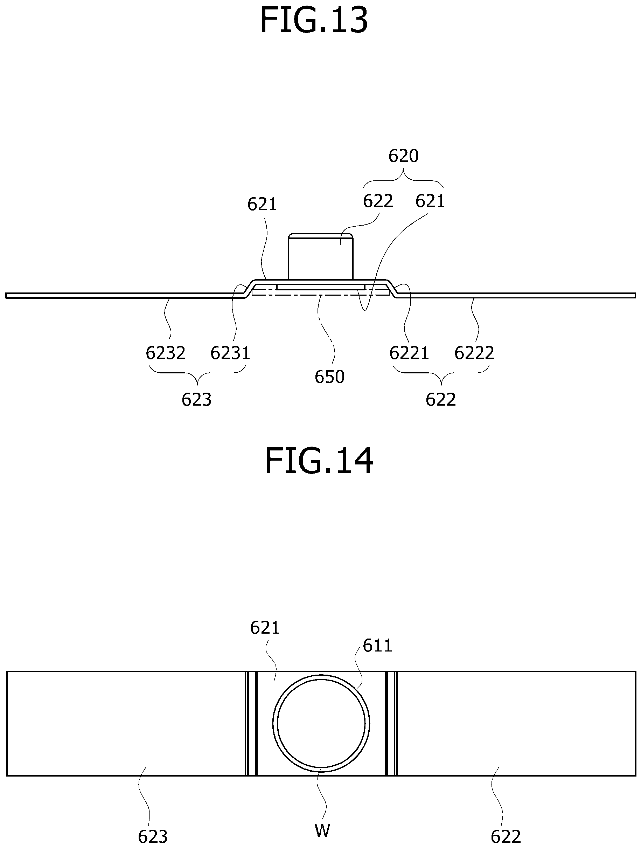

FIG. 12 is an exploded perspective view schematically illustrating the second connection member according to an embodiment of the present invention; FIG. 13 is a side view schematically illustrating the second connection member according to an embodiment of the present invention; and FIG. 14 is a bottom view schematically illustrating the second connection member according to an embodiment of the present invention. Referring to FIGS. 2 to 6 and FIGS. 12 to 14, the second connection member 600 according to an embodiment may include a second current collector 610 and a second current collector plate 620. The second current collector 610 may be welded to a bottom surface of the second current collector plate 620.

The second current collector 610 may be connected to the second terminal 430 by passing through the second current collector plate 620. The second current collector plate 620 may be connected to the second tab member 302.

The second current collector 610 according to an embodiment may include a second body 611 and a second boss 612.

The second body 611 forms a side of the exterior of the second current collector 610, and may support the second boss 612.

The second body 611 according to an embodiment may be disposed between the electrode assembly 200 and the second current collector plate 620. The second body 611 may be spaced apart from a lower surface of the second terminal 430 by a distance (e.g., a predetermined distance) in the first direction. The second terminal axis C2 may pass through a central portion of the second body 611. In an embodiment, a cross-section of the second body 611 may have a circular band or disk shape. However, the second body 611 may be changed in design to have any of various shapes, such as an oval shape, a polygonal shape, and the like.

The second boss 612 extends from the second body 611, and may be connected to the second terminal 430. The second boss 612 may pass through the second current collector plate 620.

The second boss 612 according to an embodiment may have a form of a cylinder extending in the first direction from the second body 611. A central axis of the second boss 612 may be positioned to be coaxial with the second terminal axis C2. An upper end surface of the second boss 612 may be in contact with the lower surface of the second terminal 430. In an embodiment, the upper end surface of the second boss 612 may be bonded to the lower surface of the second terminal 430 by laser welding. A cross-sectional shape of the second boss 612 may be variously changed in design, such as an oval shape, a polygonal shape, and the like, in addition to a circular shape.

The second current collector plate 620 is fixed to the second current collector 610, and may be connected to the second tab member 302. In an embodiment, the second current collector 610 may be brought into surface contact with the bottom surface of the second current collector plate 620 and then laser welded.

The second current collector plate 620 according to an embodiment may include a second center plate 621, a second inner plate 622, and a second outer plate 623.

The second center plate 621 forms a central portion of the exterior of the second current collector plate 620, and may be connected to the second current collector 610. The second center plate 621 according to an embodiment may be disposed between the second terminal 430 and the second body 611. A lower surface of the second center plate 621 is positioned on the opposite side of the second boss 612, and may come into contact with an upper surface of the second body 611. A second center hole 629 may be formed in the second center plate 621. The second center hole 629 may be disposed in a central portion of the second center plate 621.

The second inner plate 622 may extend in the second direction from one end portion of the second center plate 621. The second inner plate 622 may be disposed to face the second inner tab member 330 in the first direction. The second inner plate 622 may be in contact with an end surface of the second inner tab member 330.

In an embodiment, the second inner tab member 330 and the second inner plate 622 may be bonded to each other by laser welding.

The second outer plate 623 may extend in the second direction from the other end portion of the second center plate 621. The second outer plate 623 may be disposed to face the second outer tab member 340 in the first direction. The second outer plate 623 may be in contact with an end surface of the second outer tab member 340.

In an embodiment, the second outer tab member 340 and the second outer plate 623 may be bonded to each other by laser welding.

The second inner plate 622 may include a second inner inclined plate 6221 and a second inner horizontal plate 6222. The second inner inclined plate 6221 may extend downwardly at an angle from the second center plate 621. The second inner horizontal plate 6222 may extend horizontally from the second inner inclined plate 6221. A length of the second inner horizontal plate 6222 in the second direction may be designed to be longer than a length of the second center plate 621 in the second direction.

The second outer plate 623 may include a second outer inclined plate 6231 and a second outer horizontal plate 6232. The second outer inclined plate 6231 may extend downwardly at an angle from the second center plate 621. The second outer horizontal plate 6232 may extend horizontally from the second outer inclined plate 6231. A length of the second outer horizontal plate 6232 in the second direction may be designed to be longer than the length of the second center plate 621 in the second direction.

In an embodiment, a circular weld line W is formed by laser welding the upper surface of the second body 611 to the bottom surface of the second center plate 621. As the second boss 612 passes through the second center hole 629, the upper surface of the second body 611 may come into surface contact with the bottom surface of the second center plate 621. The second body 611 and the second center plate 621 can maintain a coupled state due to the single circular weld line W.

In an embodiment, a thickness of the second body 611 may be in a range from 0.4 mm to 1 mm. The thickness of the second body 611 may correspond to, be greater than, or be less than a thickness of the second current collector plate 620. In an embodiment, the second body 611 has a circular shape and a thin thickness, which can reduce material costs.

If the second body 611 is coupled to the second current collector plate 620, a height of the second body 611 is greater than a height of each of the second inner horizontal plate 6222 and the second outer horizontal plate 6232. Accordingly, the second body 611 and the electrode assembly 200 may become spaced apart from each other.

The second connection member 600 according to an embodiment of the present invention may further include a second insulating pad 650. The second insulating pad 650 may be disposed between the second current collector 610 and the electrode assembly 200. The second insulating pad 650 may be made of an insulating material. The second insulating pad 650 may be attached to the bottom surface of the second body 611, or may be attached to the electrode assembly 200. The second insulating pad 650 may prevent or substantially prevent the second body 611 and the electrode assembly 200 from coming into contact with each other, which may occur due to component damage, for example.

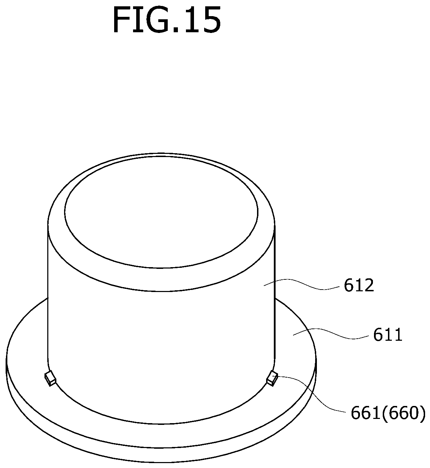

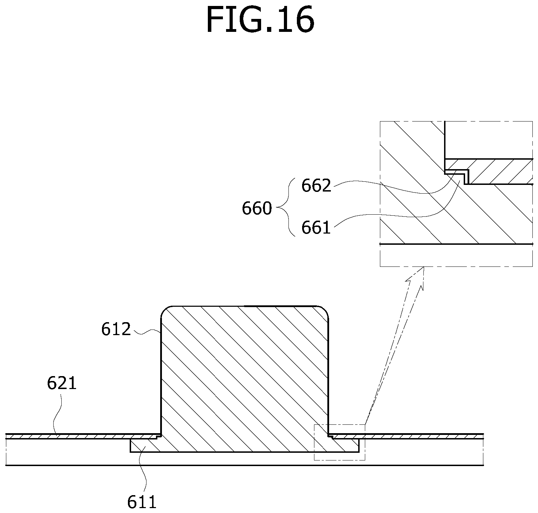

FIG. 15 is a view schematically illustrating a second current collector guide part according to an embodiment of the present invention; and FIG. 16 is a view schematically illustrating a position-corrected state by the second current collector guide part in FIG. 15. Referring to FIGS. 15 and 16, the second connection member 600 according to an embodiment of the present invention may further include a second current collector guide part 660.

The second current collector guide part 660 may guide an assembly position of the second current collector 610 and the second current collector plate 620. The second current collector guide part 660 may include a second guide protrusion 661 and a second guide groove 662.

The second guide protrusion 661 may be formed on the second current collector 610. The second guide protrusion 661 may be disposed at a lower end of the second boss 612. One or more second guide protrusions 661 may be provided.

The second guide groove 662 is formed in the second current collector plate 620, and the second guide protrusion 661 may be inserted into the second guide groove 662. The second guide groove 662 may be formed in the second center plate 621 corresponding to a periphery of the second center hole 629.

When the second boss 612 passes through the second center hole 629 and the second body 611 is in contact (e.g., close contact) with the second center plate 621, the second guide protrusion 661 may be inserted into the second guide groove 662. As a result, a coupling position of the second body 611 and the second center plate 621 may be guided.

A plurality of secondary batteries 2 may be provided. The plurality of secondary batteries 2 may be arranged in two or more rows in at least one direction of a length direction (an X-axis direction based on FIG. 1) or a width direction (a Y-axis direction based on FIG. 1) of the housing 1. In FIG. 1, a case in which the plurality of secondary batteries 2 are arranged in six rows in the length direction of the housing 1 is illustrated as an example, but, an arrangement form of the plurality of secondary batteries 2 is not limited thereto, and may be variously changed in design. The plurality of secondary batteries 2 may be arranged side by side. A number of the secondary batteries 2 may be variously changed in design depending on the size, shape, or the like of the housing 1.

The first terminal 420 of one of a pair of adjacent secondary batteries 2 and the second terminal 430 of the other one of the pair of adjacent secondary batteries 2 may be disposed to face each other in the length direction of the housing 1. That is, the front surface portion 120 of one of the adjacent secondary batteries 2 may be disposed to face the rear surface portion 130 of the other one of the adjacent secondary batteries 2.

The plurality of secondary batteries 2 may be electrically connected by the bus bars 3. The bus bar 3 according to an embodiment may be disposed between the cover 12 and the secondary battery 2. A plurality of bus bars 3 may be provided. Each of the bus bars 3 may connect a pair of adjacent secondary batteries 2 in series or parallel.

In an example, both, or opposite, sides of the bus bar 3 may be connected to the first terminal 420 of one of the pair of adjacent secondary batteries 2 and the second terminal 430 of the other one of the pair of adjacent secondary batteries 2, respectively. Accordingly, the plurality of secondary batteries 2 may be connected in series with each other by the bus bar 3.

However, a connection form of the bus bar 3 is not limited thereto, and it is also possible that both, or opposite, sides are respectively connected to the first terminal 420 of one of the pair of adjacent secondary batteries 2 and the second terminal 430 of the other one of the pair of adjacent secondary batteries 2, or that both, or opposite, sides are respectively connected to the second terminal 430 of one of the pair of adjacent secondary batteries 2 and the second terminal 430 of the other one of the pair of adjacent secondary batteries.

The bus bar 3 may be formed of an electrically conductive material, such as copper, aluminium, nickel, or the like. However, a specific shape of the bus bar 3 is not limited to that shown in FIG. 1, and may be variously changed in design so as to electrically connect the adjacent secondary batteries 2.

The plurality of bus bars 3 may be supported inside the housing 1 by a bus bar holder H.

The bus bar holder H according to an embodiment may be formed to have a shape of a flat plate. The bus bar holder H may be disposed between the cover 12 and the secondary batteries 2. The bus bars 3 may be fixed to the bus bar holder H by any of various types of coupling methods, such as fitting coupling, bolting, injection coupling, and the like. In an embodiment, the bus bar holder H may include a polymer compound material that is electrically insulative.

In a secondary battery according to one or more embodiments of the present invention and a battery pack including the same, a first current collector plate is connected to a first tab member, and a first current collector is connected to a first terminal through the first current collector plate, thereby increasing an internal space utilization rate.

In a secondary battery according to one or more embodiments of the present invention and a battery pack including the same, a first body is formed in a circular band shape and a circular weld line is formed when the first body is coupled to a bottom surface of a first current collector plate, thereby reducing a number of welds and material costs.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure should be defined by the claims.

## Claims

1. A secondary battery comprising:
a case;
an electrode assembly in the case and comprising a first electrode and a second electrode;
a first tab member connected to the first electrode and extending from the electrode assembly in a first direction;
a cap assembly facing the electrode assembly and comprising a first terminal and a second terminal; and
a first connection member between the electrode assembly and the cap assembly, and comprising a first current collector plate connected to the first tab member and a first current collector connected to the first terminal and passing through the first current collector plate.

2. The secondary battery as claimed in claim 1, wherein the first current collector is welded to a bottom surface of the first current collector plate.

3. The secondary battery as claimed in claim 1 or claim 2, wherein the first current collector plate comprises:
a first center plate in which a first center hole is formed;
a first inner plate extending from an end portion of the first center plate in a second direction that intersects the first direction; and
a first outer plate extending from another end portion of the first center plate in the second direction.

4. The secondary battery as claimed in claim 3, wherein the first inner plate comprises a first inner inclined plate extending downwardly at an angle from the first center plate, and a first inner horizontal plate extending horizontally from the first inner inclined plate, and
the first outer plate comprises a first outer inclined plate extending downwardly at an angle from the first center plate, and a first outer horizontal plate extending horizontally from the first outer inclined plate.

5. The secondary battery as claimed in claim 4, wherein the first current collector comprises:
a first body coupled to a bottom surface of the first center plate; and
a first boss protruding from the first body in the first direction and connected to the first terminal through the first center hole.

6. The secondary battery as claimed in claim 5, wherein the first body has a circular band shape.

7. The secondary battery as claimed in claim 5 or claim 6, wherein a thickness of the first body is from 0.4 mm to 1 mm.

8. The secondary battery as claimed in any one of claims 5 to 7, wherein a height of the first body is greater than a height of each of the first inner horizontal plate and the first outer horizontal plate, such that the first body and the electrode assembly are spaced apart from each other.

9. The secondary battery as claimed in any one of claims 1 to 8, wherein the first connection member further comprises a first insulating pad between the first current collector and the electrode assembly.

10. The secondary battery as claimed in any one of claims 1 to 9, wherein the first connection member further comprises a first current collector guide part configured to guide an assembly position of the first current collector and the first current collector plate.

11. The secondary battery as claimed in claim 10, wherein the first current collector guide part comprises:
a first guide protrusion located on the first current collector; and
a first guide groove located in the first current collector plate and in which the first guide protrusion is configured to be inserted.

12. The secondary battery as claimed in any one of claims 1 to 11, further comprising:
a second tab member connected to the second electrode and spaced apart from the first tab member; and
a second connection member between the electrode assembly and the cap assembly and connected to the second terminal and the second tab member.

13. The secondary battery as claimed in claim 12, wherein the second connection member comprises:
a second current collector plate connected to the second tab member; and
a second current collector connected to the second terminal by passing through the second current collector plate and welded to a bottom surface of the second current collector plate.

14. The secondary battery as claimed in claim 13, wherein the second current collector plate comprises:
a second center plate in which a second center hole is formed;
a second inner plate extending from an end portion of the second center plate in a second direction that intersects the first direction; and
a second outer plate extending from another end portion of the second center plate in the second direction.

15. A battery pack comprising:
a housing; and
a plurality of secondary batteries in the housing,
wherein each of the secondary batteries includes:
a case;
an electrode assembly in the case and comprising a first electrode and a second electrode;
a first tab member connected to the first electrode and extending from the electrode assembly in a first direction;
a cap assembly facing the electrode assembly and comprising a first terminal and a second terminal; and
a first connection member between the electrode assembly and the cap assembly, and comprising a first current collector plate connected to the first tab member and a first current collector connected to the first terminal and passing through the first current collector plate.
